# EUROPEAN PATENT SPECIFICATION

(11) **EP 4 156 990 B1**
(45) Date of publication and mention of the grant of the patent: **25.03.2026**
(21) Application number: 21727513.0
(22) Date of filing: 11.05.2021
(51) Int. Cl.: A24F 40/40, A24F 40/485

(54) **DELIVERY SYSTEM**
LIEFERUNGSSYSTEM
SYSTÈME DE DISTRIBUTION

(30) Priority: 29.05.2020 GB 202008120
(43) Date of publication of application: 05.04.2023
(73) Proprietor: Nicoventures Trading Limited, London WC2R 3LA (GB)
(72) Inventor: CHEN, Ping Chou, London WC2R 3LA (GB); WOODMAN, Tom, London WC2R 3LA (GB); LAI, Sam, London WC2R 3LA (GB)
(74) Representative: Grey, Ian Michael
(86) International application number: PCT/GB2021/051122
(87) International publication number: WO 2021/240129

(56) References cited:
- EP-A1- 3 479 858
- EP-A1- 3 590 368
- CN-A- 102 266 125
- US-A1- 2016 286 858
- US-A1- 2020 113 242

## Description

The present specification relates to a delivery system, such as a non-combustible aerosol provision system, or an aerosol-free delivery system.

Smoking articles, such as cigarettes, cigars and the like burn tobacco during use to create tobacco smoke. Attempts have been made to provide alternative delivery systems to these articles by creating products that release compounds without combustion. Examples of such delivery systems are so-called "heat not burn" products or tobacco heating devices or products, which release compounds by heating, but not burning, a substrate. For example, tobacco heating devices heat an aerosol generating substrate, which may be tobacco or other non-tobacco products which may or may not contain nicotine, to form an aerosol by heating the substrate without burning it.

It is known from US2020/113242A1 to provide a delivery device comprising a housing having a vent opening and a battery received in the housing. A membrane formed from a gas permeable material extends over the vent opening.

According to an aspect of the invention, there is provided a delivery device comprising: a housing comprising a vent opening and having an inner surface, a battery received in the housing, a membrane formed from a gas permeable material extending over the vent opening and having a peripheral region that extends beyond the vent opening and faces said inner surface of the housing, a circuit board mounted in the housing and spaced from the membrane, and a membrane support positioned between the membrane and the circuit board and having an upper surface facing the membrane, wherein the membrane support is located on the circuit board such that the membrane support upstands towards the membrane, wherein the upper surface of the membrane support comprises regions that lie in contact with the periphery of the membrane.

The membrane may be formed from a material that is substantially impermeable to liquid. It may have a pore size in the region of 0.65µm, a thickness of between 0.11mm-0.19mm, and/or a venting capacity of 1900-2400ml/cm²/min at a pressure of 7kpa.

The membrane is mounted, and is preferably glued, to an inner surface of the housing.

The upper surface of the membrane support comprises regions that lie in contact with the membrane.

The regions of the upper surface in contact with the membrane lie in contact with at least a part of the periphery of the membrane that lies in contact with the housing.

The membrane support can be made from a resiliently deformable material.

The membrane support may be configured so that it assumes a deformed condition between the circuit board and the membrane, when located in the housing, so that the membrane support applies a biasing force against the membrane to push it against the housing. The membrane support may, effectively, be squashed between the circuit board and the membrane.

An LED may be mounted to the circuit board and positioned beneath the vent opening such that, when active, light from the LED is visible through the membrane extending across the vent opening.

The membrane can be made from, or be coated with, a material that diffuses the light from the LED.

The membrane support can be positioned so that it extends over the LED, and the membrane support may have a recess in which the LED on the circuit board is received. The membrane support may be made from a light transmitting material, and/or it may have an opening to allow light from the LED to pass through the membrane support. The delivery device may comprise a substrate aerosolising module including a heater and an aerosolisable substrate, the substrate aerosolising module being configured to aerosolise the substrate in response to a control signal from the control module.

Example embodiments will now be described, by way of example only, with reference to the following schematic drawings, in which:
FIG. 1 is a schematic drawing of a device in accordance with an example embodiment;
FIG. 2 is an exploded view of a control module of the device shown in Fig. 1;
FIG. 3 is a cross-sectional view of the assembled control module of Fig. 1 and 2;
FIG. 4 is an enlarged view of a portion (encircled as X in Figure 3) of the assembled control module of Fig. 3; and
FIG. 5A to 5C shows a top perspective, side cross-sectional and bottom views, respectively, of the membrane support.

### Detailed Description

As used herein, the term "delivery system" is intended to encompass systems that deliver at least one substance to a user, and includes: non-combustible aerosol provision systems that release compounds from an aerosol-generating material without combusting the aerosol-generating material, such as electronic cigarettes, tobacco heating products, and hybrid systems to generate aerosol using a combination of aerosol-generating materials.

Embodiments according to the invention provide a delivery system that includes a housing and a battery contained within the housing. The housing has a vent to allow gases to escape from the housing through the vent, thereby preventing a build-up of pressure within the housing in the event that the battery is, for example, damaged.

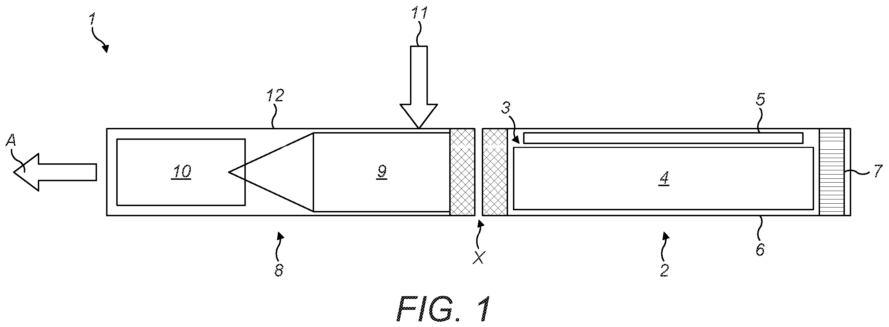

FIG. 1 is a schematic drawing of a delivery system in the form of a non-combustible aerosol provision device, indicated generally by the reference numeral 1, in accordance with an example embodiment. The device 1 comprises two main components 2, 8.

The first component 2 of the device 1 includes a control module 3, which includes a battery 4 and a circuit board 5. The control module 3 is received within a housing 6 which encloses the control module 3 and forms the external appearance of the device. The housing 6 may be a tubular sleeve, in which case the control module 3 is inserted into the housing 6 from one open end during assembly of the device 1 and the open end of the housing 6 is then closed by an end cap 7. However, the housing 6 may, alternatively, be formed from multiple parts or shells that are attached together to form an enclosure around the control module 3. If the housing 6 is formed from two half-shells for instance, the control module 3 may be placed in one half-shell part before the other half-shell part is placed on, and is attached to, the other half-shell part thereby encapsulating the control module 3 within the housing. The housing 6 is preferably formed from a metal, such as aluminium, although other materials for the housing 6 are also possible.

The second component 8 of the device 1 includes a heater 9 and a liquid reservoir 10 that may collectively form an aerosol-generating module. The first and second components 2, 8 may be modular, i.e. the second component 8 may have its own housing 12 and be separable from the first component (at a join marked X in Fig. 1) for repair or replacement. A releasable electrical connection joins the first and second components 2, 8 to enable power and control signals to be transmitted between them. However, the first and second components 2, 8 may not be separable, other than by disassembly of the device 1. More specifically, the first and second components 2, 8 may be connected together during assembly and received within the same integral housing 6 to form an integral unit.

When the device of Figure 1 is used, air is drawn into an air inlet of the heater 9, as indicated by the arrow 11. The heater 9 is controlled by the control module 3 and heats the incoming air. The heated air is directed to the liquid reservoir 10, where an aerosol is generated. The aerosol exits the device 1 at an air outlet, as indicated by the arrow A, into the mouth of a user of the device 1.

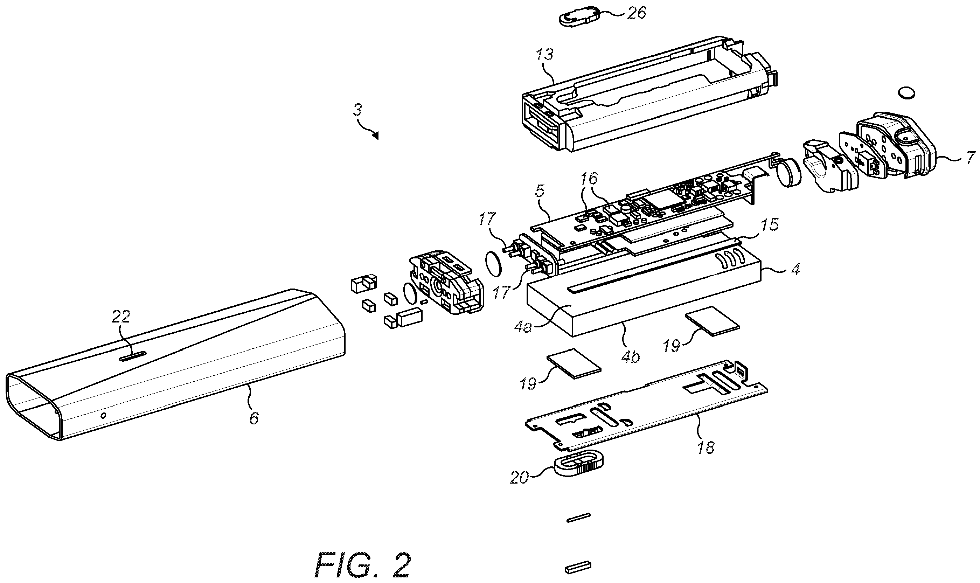

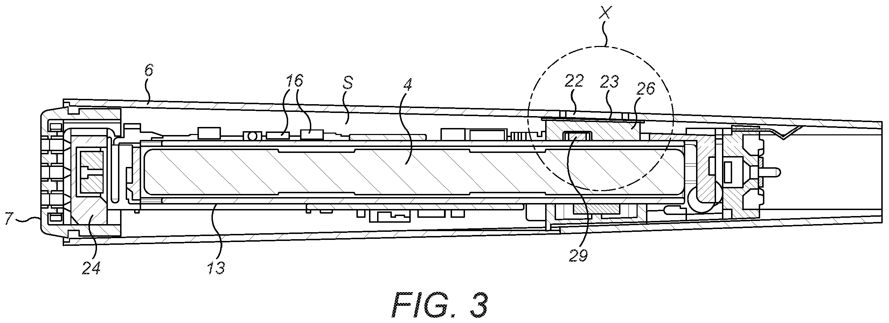

FIG. 2 is an exploded view of the control module 3 shown in Figure 1, with the second component 8 omitted, and Figure 3 is a cross-sectional view of the control module 3 of Figure 2 once assembled and received within the housing 6. In the embodiment of Figure 2, it can be seen that the housing 6 is in the form of a sleeve and the remaining components of the control module 3 are inserted into the housing 6 from one end. The end is then closed by an end cap 7.

As shown in FIG. 2, and also in Figure 3 which shows a cross-sectional assembled view of device 1, the control module 3 includes a frame or carrier 13 in which the battery 4 is received and held. A circuit board 5 is mounted to the top, outside surface of the carrier 13 and is supported by both the carrier 13 and by the outside of one major face 4a of the battery 4. An insulated spacer or support pad 15 may be located between the major face 4a of the battery 4 and the circuit board 5 where they overlie each other. The support pad 15 may be adhesive, so that the circuit board 5 is held in place on the major face 4a of the battery 4 by the adhesive pad 15. Various electrical circuit and control elements 16 are mounted to the circuit board 5, which also has connectors 17 for electrical connection of the circuit board 5 to the aerosol generating module of the second component 8. These connectors 17 are positioned on a section of the circuit board 5 that overhangs one end of the carrier 13.

A metal or conductive plate 18 is mounted to the underside of the carrier 13 and to the other major face 4b of the battery 4 on the opposite side of the battery 4 to the circuit board 5. An insulated pad 19 or spacer may be located between the other major face 4b of the battery 4 and the metal plate 18 and may be adhesive so that the metal plate 18 is held in place on the other major face 4b of the battery 4. The metal plate 18 forms an electrical connection between the battery 4 and the circuit and control elements 16 on the circuit board 5. It will be understood that the carrier 13 is open, in the sense that it does not completely cover or surround the battery 4. Even with the circuit board 5 and metal plate 18 mounted to the carrier 13 and extending over the major faces 4a, 4b of the battery 4, the battery 4 is still partially exposed. This enables any heat or gases generated by the battery 4, which may occur either as a result of normal use, or due to a malfunction, to escape into regions of the housing 6 that surround the battery 4, rather than being trapped within the carrier 13.

The control module 3 includes a press button on/off switch 20, which is mounted to the metal plate 18 and is accessible through an aperture in the housing 6. Pressing the on/off switch 20 connects, or disconnects, the battery 4 from the circuitry 16 on the circuit board 5, thereby switching the device on or off, or performing other control functions as required.

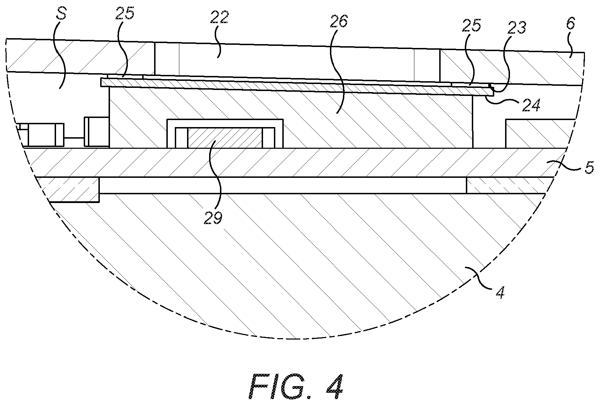

As can be seen most clearly in Figures 3 and 4, the carrier 13, together with the battery 4 and circuit board 5 mounted thereto, is received within the housing 6 such that there is a space 'S' between the circuit board 5 and the wall of the housing 6 into which heat or gases generated by the battery 4 may dissipate internally. Electrical circuit and control components 16 that are mounted on the circuit board 5 occupy this space.

As the housing 6 is a sealed unit once assembled, gas may collect within the housing 6 resulting in a build-up of pressure. Therefore, a vent 22 is provided through the wall of the housing 6 to enable any gases to escape and to maintain a nominal or atmospheric pressure within the device 1. The vent 22 also allows air to circulate into and out of the housing 6 to minimise any temperature differences.

The vent 22 through which air or other gases can escape from the housing 6 is covered by a membrane 23 which, as a minimum requirement, is sufficiently permeable to allow air and/or gas to pass through it with little or no resistance. However, the membrane 23 may also be waterproof or at least have a degree of water resistance. For example, and with reference to the IP standard drawn up by the International Electrotechnical Commission (IEC), the device 1 may have what is commonly referred to as an 'IP67 rating', which means that it is resistant to the seeping of dust or dirt into the device 1, which includes access through the membrane 23. This rating also means that the device 1 can be submerged in fresh water to a depth of up to 1.5 metres for a period of half an hour, without the water penetrating the device 1, and so the membrane 23 covering the vent 22 in the housing 6 needs to be able to prevent such penetration.

To allow for the passage of gas or air, it is envisaged that the membrane 23 may have a hole size of 0.65µm, and a thickness of between 0.11mm-0.19mm, with a venting capacity of 1900-2400ml/cm²/min at a pressure of 7kpa. One such material that meets these requirements is made by Dong Guan PUW EPTFE Material Co., LTD., under product no. PUW867.

The membrane 23 is attached to the housing 6 beneath the opening. The membrane 23 is attached to the inside surface of the housing 6 so that it is recessed from the external surface of the housing 6 by the thickness of the housing 6 making it less accessible and so better protected. The membrane 23 is larger than the vent 22 and so has a peripheral region 24 that extends beyond the opening and faces the inside surface of the housing 6. A ring of permanent adhesive 25 is applied to this peripheral region 24 in an annular pattern around the entire peripheral region 24, and attaches the membrane 23 to the housing 6 so that it is held against the housing 6 and extends across the vent 22.

A gap or spacing exists between the circuit board 5 and the membrane 23. Although this gap relatively small, any foreign object or a finger inserted through the vent 22 in the housing 6 and which applies pressure to the membrane 23 may cause the membrane 23 to rupture or the adhesive 25 to fail, resulting in the membrane 23 becoming detached from the housing 6. To prevent or mitigate against these issues, a membrane support 26, shown in its most basic form in Figures 3 and 4, is located between the membrane 23 and the circuit board 5. The membrane support 26 is mounted to the circuit board 5 and upstands in a direction towards the membrane 23.

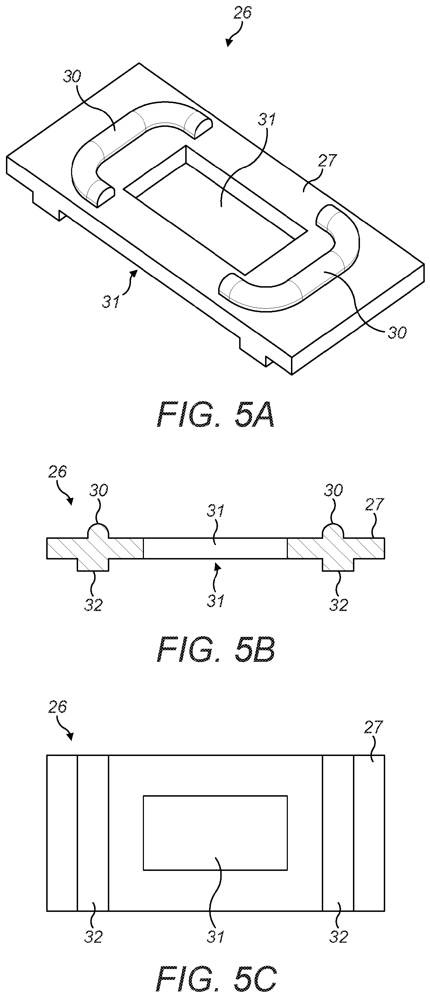

A more detailed version of the membrane support 26 is shown in Figure 5A to 5C, and from which it can be seen that the membrane support 26 has an upper surface 27 that faces, and which lies in contact with, the underside of the membrane 23, at least beneath a portion of the membrane 23 which extends across the vent 22. The membrane support 26 may have regions that are not in contact with the membrane 23 so that spaces remain through which gas can pass over the upper surface 27 of the support 26, and through the membrane 23 and vent 22. In particular, and as shown in Figure 5A and B, the membrane support 26 may have raised areas 30 upon which the membrane 23 sits. The raised areas 30 form a space between the membrane 23 and the upper surface 27. The raised areas 30 extend about only part of the vent 22 to allow gas to escape between the upper surface 27 and the membrane 23 and pass through the vent 22.

If pressure is applied to the membrane 23 through the vent 22, the membrane 23 is pressed against, and so supported by, the upper surface 27 or regions 28 of the upper surface 28 of the membrane support 26 with little or no deflection, thereby preventing any damage to the membrane 23 or detachment of the membrane 23 from the housing 6.

The membrane support 26 may be made from a deformable or flexible material, such as rubber, and it may be sized so that, when positioned in the housing 6, it is deformed or squashed between the circuit board 5 and the membrane 23. The membrane support 26 has a degree of resilience such that, once deformed, it applies a force to the membrane 23 that pushes the membrane 23 against the housing 6, i.e. the peripheral region 24 of the membrane 23 which is glued to the housing 6 is pushed against the housing 6 by the membrane support 26. The membrane support 26 therefore also holds the membrane 23 in place, in addition to the adhesive 25. In some embodiments, it may be found that the membrane 23 can be held in place only by the membrane support 26, in which case the membrane 23 need not be glued or otherwise attached to the housing 6. It is also possible for the membrane 23 to be glued or otherwise attached to the membrane support 26 which is then urged against the housing 6 by the deformation and resilience of the membrane support 26. It will be understood that the membrane support 26 resists a degree of pressure if a force is applied to the membrane 23 through the vent 22, prior to any deformation of the membrane support 26.

It will be appreciated, particularly from Figure 4, that the housing 6 may narrow from one end towards the other. In this instance, the membrane support 26 may also be thinner at one end, i.e. its upper surface 27 may be angled so that it is parallel to the membrane 23 and the housing wall.

It is common for delivery devices 1 to have a light-emitting diode (LED) 29 so that a user can tell if the device is powered, or to signal other functions such as the need for charging of the battery 4. In the majority of known devices, the LED is provided on the circuit board 5 and a window is provided in the housing 6 through which the LED 29 can be seen, or in which the LED 29 is located. In some embodiments of the present invention, the vent 22 is also used as a window through which the LED 29 can be seen, and so provides a dual function, thereby reducing the number of openings that need to be provided in the housing 6. For this purpose, the vent 22 and the LED 29 on the circuit board 5, are positioned so that they are in alignment when the device 1 is assembled. i.e the LED 29 is positioned beneath the vent 22. An LED 29 imounted to the circuit board 5 beneath the vent 22 is shown in Figure 3 and 4.

If the vent 22 also provides a window through which the LED 29 is visible, the membrane 23 may additionally have properties that enable it to act as a light guide to diffuse light from the LED 29. In certain embodiments, the membrane 23 may be coated with an optical film, such as a diffuser film or light control film, to improve its performance as a light guide, in addition to having its gas/air permeable properties.

If the LED 29 is positioned beneath the vent 22, then it is possible that the LED 29 may be damaged in addition to, or instead of, the membrane 23, if a foreign object or finger is inserted through the vent 22 and pressure is applied to the membrane 23. Therefore, the membrane support 26 extends over the LED 29 on the circuit board 5 and may have a recess 31 formed between feet 32 in which the LED 29 is received when the membrane support 26 is mounted to the circuit board 5. The membrane support 26 may be made of a light transmissive material, so that light can pass through it from the LED 29, and through the membrane 23, so that it is visible from outside the housing 6. In addition, or alternatively, the membrane support 26 may have an opening 31 positioned in the vicinity of the LED 29 such that light from the LED 29 can pass through the opening 31, through the membrane 23, and be visible to a user from outside the device 1.

The various embodiments described herein are presented only to assist in understanding and teaching the claimed features. These embodiments are provided as a representative sample of embodiments only, and are not exhaustive and/or exclusive. It is to be understood that advantages, embodiments, examples, functions, features, structures, and/or other aspects described herein are not to be considered limitations on the scope of the invention as defined by the claims.

## Claims

1. A delivery device comprising:
a housing (6) comprising a vent opening (22) and having an inner surface,
a battery (4) received in the housing (6),
a membrane (23) formed from a gas permeable material extending over the vent opening (22) and having a peripheral region (24) that extends beyond the vent opening (22) and faces said inner surface of the housing (6),
a circuit board (5) mounted in the housing (6) and spaced from the membrane (23), **characterized in that** the delivery device comprises
a membrane support (26) positioned between the membrane (23) and the circuit board (5) and having an upper surface facing the membrane (23), wherein the membrane support (26) is located on the circuit board (5) such that the membrane support (26) upstands towards the membrane (23),
wherein the upper surface of the membrane support (26) comprises regions that lie in contact with the periphery of the membrane (23).

2. A delivery device according to claim 1, wherein the membrane (23) is formed from a material that is substantially impermeable to liquid.

3. A delivery device according to claim 1 or 2, wherein the membrane (23) has a pore size in the region of 0.65µm.

4. A delivery device according to any preceding claim wherein the membrane (23) has a thickness of between 0.11mm-0.19mm.

5. A delivery device according to any preceding claim wherein the membrane (23) has a venting capacity of 1900-2400ml/cm²/min at a pressure of 7kpa.

6. A delivery device according to any preceding claim, wherein the membrane (23) is mounted, preferably glued, to an inner surface of the housing (6).

7. A delivery device according to any preceding claim, wherein the membrane support (26) is attached to the membrane (23).

8. A delivery device according to any preceding claim, wherein the regions of the upper surface lie in contact with at least a part of the periphery of the membrane (23) that lies in contact with the housing (6).

9. A delivery device according to claim 8, wherein the membrane support (26) is made from a resiliently deformable material.

10. A delivery device according to claim 9, wherein the membrane support (26) is configured so that it assumes a deformed condition between the circuit board (5) and the membrane (23), when located in the housing (6), so that the membrane support (26) applies a biasing force against the membrane (23) to push it against the housing (6).

11. A delivery device according to any preceding claim, comprising an LED (29) mounted to the circuit board (5) and positioned beneath the vent opening (22) such that, when active, light from the LED (29) is visible through the membrane (23) extending across the vent opening (22).

12. A delivery device according to claim 11, wherein the membrane (23) is made from, or is coated with, a material that diffuses the light from the LED (29).

13. A delivery device according to claim 11 or 12, wherein the membrane support (26) is positioned so that it extends over the LED (29), the membrane support (26) having a recess (31) in which the LED (29) on the circuit board (5) is received.

14. A delivery device according to claim 13, wherein the membrane support (26) is made from a light transmitting material, or has an opening (31) to allow light from the LED (29) to pass through the membrane support (26).

15. A delivery device according to any preceding claim, comprising a control module (3) and a substrate aerosolising module (8) including a heater (9) and an aerosolisable substrate, the substrate aerosolising module (8) being configured to aerosolise the substrate in response to a control signal from the control module (3).

## Patentansprüche

1. Lieferungsvorrichtung, umfassend:
ein Gehäuse (6), das eine Entlüftungsöffnung (22) umfasst und eine innere Oberfläche aufweist,
eine in dem Gehäuse (6) aufgenommene Batterie (4),
eine Membran (23), die aus einem gasdurchlässigen Material ausgebildet ist, die sich über die Entlüftungsöffnung (22) erstreckt und einen Randbereich (24) aufweist, der sich über die Entlüftungsöffnung (22) hinaus erstreckt und der inneren Oberfläche des Gehäuses (6) zugewandt ist,
eine Leiterplatte (5), die in dem Gehäuse (6) montiert und von der Membran (23) beabstandet ist, **dadurch gekennzeichnet, dass** die Lieferungsvorrichtung Folgendes umfasst
eine Membranhalterung (26), die zwischen der Membran (23) und der Leiterplatte (5) positioniert ist und eine obere Oberfläche aufweist, die der Membran (23) zugewandt ist, wobei sich die Membranhalterung (26) derart auf der Leiterplatte (5) befindet, dass die Membranhalterung (26) hin zu der Membran (23) hochsteht,
wobei die obere Oberfläche der Membranhalterung (26) Bereiche umfasst, die mit dem Rand der Membran (23) in Kontakt stehen.

2. Lieferungsvorrichtung nach Anspruch 1, wobei die Membran (23) aus einem Material ausgebildet ist, das im Wesentlichen flüssigkeitsundurchlässig ist.

3. Lieferungsvorrichtung nach Anspruch 1 oder 2, wobei die Membran (23) eine Porengröße im Bereich von 0,65 µm aufweist.

4. Lieferungsvorrichtung nach einem der vorhergehenden Ansprüche, wobei die Membran (23) eine Dicke zwischen 0,11 mm und 0,19 mm aufweist.

5. Lieferungsvorrichtung nach einem der vorhergehenden Ansprüche, wobei die Membran (23) eine Entlüftungskapazität von 1900 bis 2400 ml/cm²/min bei einem Druck von 7 kPa aufweist.

6. Lieferungsvorrichtung nach einem der vorhergehenden Ansprüche, wobei die Membran (23) an einer inneren Oberfläche des Gehäuses (6) angebracht, vorzugsweise angeklebt, ist.

7. Lieferungsvorrichtung nach einem der vorhergehenden Ansprüche, wobei die Membranhalterung (26) an der Membran (23) befestigt ist.

8. Lieferungsvorrichtung nach einem der vorhergehenden Ansprüche, wobei die Bereiche der oberen Oberfläche mindestens mit einem Teil des Randes der Membran (23) in Kontakt stehen, der mit dem Gehäuse (6) in Kontakt steht.

9. Lieferungsvorrichtung nach Anspruch 8, wobei die Membranhalterung (26) aus einem elastisch verformbaren Material besteht.

10. Lieferungsvorrichtung nach Anspruch 9, wobei die Membranhalterung (26) so konfiguriert ist, dass sie, wenn sie sich in dem Gehäuse (6) befindet, zwischen der Leiterplatte (5) und der Membran (23) einen verformten Zustand annimmt, so dass die Membranhalterung (26) eine Vorspannkraft auf die Membran (23) ausübt, um sie gegen das Gehäuse (6) zu drücken.

11. Lieferungsvorrichtung nach einem der vorhergehenden Ansprüche, umfassend eine LED (29), die derart auf der Leiterplatte (5) montiert und unterhalb der Entlüftungsöffnung (22) positioniert ist, dass im aktiven Zustand Licht von der LED (29) durch die Membran (23), die sich über die Entlüftungsöffnung (22) erstreckt, sichtbar ist.

12. Lieferungsvorrichtung nach Anspruch 11, wobei die Membran (23) aus einem Material besteht oder mit einem Material beschichtet ist, das das Licht von der LED (29) streut.

13. Lieferungsvorrichtung nach Anspruch 11 oder 12, wobei die Membranhalterung (26) so positioniert ist, dass sie sich über die LED (29) erstreckt, wobei die Membranhalterung (26) eine Aussparung (31) aufweist, in der die LED (29) auf der Leiterplatte (5) aufgenommen ist.

14. Lieferungsvorrichtung nach Anspruch 13, wobei die Membranhalterung (26) aus einem lichtdurchlässigen Material besteht oder eine Öffnung (31) aufweist, die ermöglicht, dass Licht von der LED (29) die Membranhalterung (26) passieren kann.

15. Lieferungsvorrichtung nach einem der vorhergehenden Ansprüche, umfassend ein Steuermodul (3) und ein Substrat-Aerosolisierungsmodul (8), das ein Heizelement (9) und ein aerosolisierbares Substrat einschließt, wobei das Substrat-Aerosolisierungsmodul (8) konfiguriert ist, um das Substrat als Reaktion auf ein Steuersignal von dem Steuermodul (3) zu aerosolisieren.

## Revendications

1. Dispositif de distribution comprenant :
un boîtier (6) comprenant une ouverture de ventilation (22) et ayant une surface interne,
une batterie (4) reçue dans le boîtier (6),
une membrane (23) formée d'un matériau perméable aux gaz se prolongeant sur l'ouverture de ventilation (22) et ayant une région périphérique (24) qui se prolonge au-delà de l'ouverture de ventilation (22) et fait face à ladite surface interne du boîtier (6),
une carte de circuit imprimé (5) montée dans le boîtier (6) et espacée de la membrane (23), **caractérisé en ce que** le dispositif de distribution comprend
un support de membrane (26) positionné entre la membrane (23) et la carte de circuit imprimé (5) et ayant une surface supérieure faisant face à la membrane (23), dans lequel le support de membrane (26) est situé sur la carte de circuit imprimé (5) de sorte que le support de membrane (26) s'élève vers la membrane (23),
dans lequel la surface supérieure du support de membrane (26) comprend des régions qui sont en contact avec la périphérie de la membrane (23).

2. Dispositif de distribution selon la revendication 1, dans lequel la membrane (23) est formée d'un matériau sensiblement imperméable aux liquides.

3. Dispositif de distribution selon la revendication 1 ou 2, dans lequel la membrane (23) a une taille de pore de l'ordre de 0,65 µm.

4. Dispositif de distribution selon une quelconque revendication précédente, dans lequel la membrane (23) a une épaisseur comprise entre 0,11 mm et 0,19 mm.

5. Dispositif de distribution selon une quelconque revendication précédente, dans lequel la membrane (23) a une capacité de ventilation de 1 900 à 2 400 ml/cm²/min à une pression de 7 kPa.

6. Dispositif de distribution selon une quelconque revendication précédente, dans lequel la membrane (23) est montée, de préférence collée, sur une surface interne du boîtier (6).

7. Dispositif de distribution selon une quelconque revendication précédente, dans lequel le support de membrane (26) est fixé à la membrane (23).

8. Dispositif de distribution selon une quelconque revendication précédente, dans lequel les régions de la surface supérieure sont en contact avec au moins une partie de la périphérie de la membrane (23) qui est en contact avec le boîtier (6).

9. Dispositif de distribution selon la revendication 8, dans lequel le support de membrane (26) est fabriqué à partir d'un matériau déformable de manière élastique.

10. Dispositif de distribution selon la revendication 9, dans lequel le support de membrane (26) est configuré de sorte qu'il adopte une condition déformée entre la carte de circuit imprimé (5) et la membrane (23), lorsqu'il est situé dans le boîtier (6), de sorte que le support de membrane (26) applique une force de rappel contre la membrane (23) pour la pousser contre le boîtier (6).

11. Dispositif de distribution selon une quelconque revendication précédente, comprenant une LED (29) montée sur la carte de circuit imprimé (5) et positionnée sous l'ouverture de ventilation (22) de sorte que, lorsqu'elle est active, la lumière de la LED (29) soit visible à travers la membrane (23) se prolongeant sur l'ouverture de ventilation (22).

12. Dispositif de distribution selon la revendication 11, dans lequel la membrane (23) est fabriquée à partir d'un matériau qui diffuse la lumière de la LED (29) ou est recouverte d'un tel matériau.

13. Dispositif de distribution selon la revendication 11 ou 12, dans lequel le support de membrane (26) est positionné de sorte qu'il se prolonge au-dessus de la LED (29), le support de membrane (26) ayant un évidement (31) dans lequel la LED (29) sur la carte de circuit imprimé (5) est reçue.

14. Dispositif de distribution selon la revendication 13, dans lequel le support de membrane (26) est fabriqué à partir d'un matériau transmettant de la lumière, ou a une ouverture (31) pour permettre à la lumière de la LED (29) de passer à travers le support de membrane (26).

15. Dispositif de distribution selon une quelconque revendication précédente, comprenant un module de commande (3) et un module d'aérosolisation de substrat (8) comportant un élément chauffant (9) et un substrat aérosolisable, le module d'aérosolisation de substrat (8) étant configuré pour aérosoliser le substrat en réponse à un signal de commande provenant du module de commande (3).
